# EUROPÄISCHE PATENTSCHRIFT

(11) **EP 2 611 743 B1**
(45) Veröffentlichungstag und Bekanntmachung des Hinweises auf die Patenterteilung: **16.07.2014**
(21) Anmeldenummer: 11755041.8
(22) Anmeldetag: 31.08.2011
(51) Int. Cl.: C03B 3/00

(54) **BESCHICKUNGSVORRICHTUNG FÜR GLASSCHMELZANLAGEN**
FEEDING DEVICE FOR GLASS MELTING INSTALLATIONS
DISPOSITIF D'ALIMENTATION POUR UNITÉS DE FUSION DE VERRE

(30) Priorität: 31.08.2010 DE 102010035893
(43) Veröffentlichungstag der Anmeldung: 10.07.2013
(73) Patentinhaber: Beteiligungen Sorg GmbH & Co. KG, 97816 Lohr am Main (DE)
(72) Erfinder: LINDIG, Matthias, 55218 Ingelheim (DE); WALTERT, Erich, 97837 Erlenbach (DE)
(74) Vertreter: Keil & Schaafhausen Patent- und Rechtsanwälte
(86) Internationale Anmeldenummer: PCT/EP2011/065037
(87) Internationale Veröffentlichungsnummer: WO 2012/028656

(56) Entgegenhaltungen:
- EP-A2- 0 282 939
- WO-A1-2009/023223
- US-A- 3 670 908
- US-A- 3 780 889

## Beschreibung

Die Erfindung betrifft eine Beschickungsvorrichtung für das Einlegen von partikelförmigem Beschickungsgut in Glasschmelzanlagen mit Schubförderern, die von Vorratsbehältern über Führungskanäle versorgt werden und auf die Schmelzenoberfläche ausgerichtet sind, und mit mindestens einem Schieber für den Vorschub des Beschickungsguts auf der Schmelzenoberfläche.

Bezüglich des Begriffs "Schubförderer" ist festzuhalten, dass es sich um solche bekannten Transport- und Dosiereinrichtungen handelt, bei denen in auf dem Umfang geschlossenen Hohlkörpern ein Transport durch Förderschrauben oder Wendeln oder durch einen Schubkolben erfolgt, die jeweils mit einem Antrieb verbunden sind, wobei die Antriebswelle oder -stange durch eine Dichtung hindurchgeführt ist. Dadurch ist eine Dichtheit gegen Staubverteilung gewährleistet.

Bezüglich des Begriffs "Teilungskante" wird festgehalten, dass es sich dabei um das obere Ende eines keilförmigen Körpers handelt, der einen senkrechten Stoffstrom aufteilt und mit engem Radius oder im Extremfall als Kante oder Grat ausgebildet sein kann.

Schubförderer sind in einer Vielzahl von Varianten bekannt. Einerseits schaffen sie eine gute Gas- und Staubabdichtung, andererseits prägen sie eine Art Spur für eine langsame Weiterbewegung des Schmelzguts auf der Schmelzenoberfläche. Durch die GB 1 364 187 A ist es daher bereits bekannt, zwei Schubförderer unter einem Winkel von 90 Grad aufeinander auszurichten und mit unterschiedlichen und periodisch schwankenden Förderleistungen zu betreiben, um dem schwimmenden Schmelzgut eine Art Pendelbewegung aufzuzwingen. Dies aber verhindert eine konstante und symmetrische Verteilung des Beschickungsguts und der Schmelzrate. Es ist auch bereits bekannt, zur Beschleunigung und Portionierung des Beschickungsguts sogenannte Schieber einzusetzen, die in der GB 1 364 187 A nicht offenbart sind, die aber die Pendelbewegungen nicht rückgängig machen könnten.

In der nicht vorveröffentlichten WO 2010/136087 A1 wird vorgeschlagen, GlasSchmelzöfen über abgeschirmte Vorbauten - sog. "Doghouses" - über maximal zwei Transporteinrichtungen mit schüttfähigen Glasgemengen zu beschicken und dabei durch eine Doghouse-Öffnung einzuführen und durch einen Schieber innerhalb des Doghouses in Richtung auf eine Schmelzwanne zu verschieben. Der Eintritt in die Schmelzwanne geschieht durch eine relativ schmale Öffnung. Dabei geht es weitgehend um eine Abdichtung des Doghouses in beiden Strömungsrichtungen gegenüber der Atmosphäre.

Der Erfindung liegt daher die Aufgabe zugrunde, eine Glasschmelzanlage in der Weise mit Beschickungsgut zu versorgen, dass eine asymmetrische Stoff- und Temperaturverteilung und Bewegungen quer zur Transportrichtung von Beschickungsgut zumindest weitgehend unterbleiben und damit auch wechselnde thermischen Belastungen der mineralischen Baustoffe der Anlage.

Die Lösung der gestellten Aufgabe erfolgt bei der eingangs angegebenen Vorrichtung erfindungsgemäß dadurch, dass
a) mindestens drei Schubförderer nebeneinander angeordnet und im Bereich ihrer Führungskanäle so dicht nebeneinander angeordnet sind, dass sie durch eine gemeinsame Verteilereinrichtung versorgbar sind, die im Zwischenbereich zwischen zwei Führungskanälen durch je eine Teilungskante voneinander getrennt sind, und dass
b) durch den Abstand zwischen je zwei Führungskanälen je ein Gestänge für den Antrieb eines in die Glasschmelze einführbaren Schiebers hindurchgeführt ist.

Dadurch wird die gestellte Aufgabe vollständig gelöst, nämlich eine Glasschmelzanlage in der Weise mit Beschickungsgut zu versorgen, dass eine asymmetrische Stoff- und Temperaturverteilung und Bewegungen quer zur Transportrichtung von Beschickungsgut zumindest weitgehend unterbleiben und damit auch wechselnde thermische Belastungen der mineralischen Baustoffe der Anlage. Durch die Portionierung und den verstärkten Vorschub des Beschickungsguts durch den Schieber werden auch Rückströmungen der Schmelze in den Beschickungsbereich begrenzt und die Vereinzelung oder Portionierung des Beschickungsguts in schwimmende Inseln begünstigt, deren Aufschmelzen in Richtung der Gesamtströmung in der Schmelzwanne zur Zunahme der Abstände begünstigt. Die Gesamtanordnung ist dennoch staubdicht, und es handelt sich insgesamt um eine kombinatorische Wirkung.

Es ist im Zuge weiterer Ausgestaltungen der erfindungsgemäßen Vorrichtung besonders vorteilhaft, wenn - entweder einzeln oder inKombination:
* die Teilungskanten in einer gemeinsamen waagrechten Ebene angeordnet sind,
* die Teilungskanten mit Abstand unterhalb einer waagrechten Randkante angeordnet sind, die eine gemeinsame Beschickungsöffnung nach oben hin umschließt,
* oberhalb der Beschickungsöffnung ein Vorratsbehälter angeordnet ist, der in seinem Bodenbereich mindestens zwei Austrittsöffnungen besitzt, die in Querrichtung zu den Teilungskanten angeordnet sind,
* die Querschnitte der Austrittsöffnungen mengenabhängig regelbar sind,
* die Transportrichtungen der Schubförderer einstellbar ausgebildet sind,
* die Förderleistungen der Schubförderer einstellbar ausgebildet sind,
* im Bereich der Austrittsöffnungen eine zusätzliche Dosiereinrichtung für Zuschlagstoffe angeordnet ist, und/oder, wenn
* der Schieber durch abgewinkelte Gestänge mit einem Drehlager und einem Antriebsmotor derart geführt ist, dass die Unterkante des Schiebers auf seiner Vorwärtsbewegung in die Glasschmelze eingetaucht und oberhalb der Glasschmelze und des Beschickungsguts zurückziehbar ist.

Die Erfindung betrifft auch ein Verfahren zum Einlegen von partikelförmigem Beschickungsgut in Glasschmelzanlagen mit Schubförderern, die von Vorratsbehältern über Führungskanäle versorgt werden und auf die Schmelzenoberfläche ausgerichtet sind, und mit mindestens einem Schieber für den Vorschub des Beschickungsguts auf der Schmelzenoberfläche.

Die Lösung der Aufgabe erfolgt bei dem vorstehend angegebenen Verfahren mit den gleichen Vorteilen erfindungsgemäß dadurch, dass
a) mindestens drei Schubförderer nebeneinander angeordnet und im Bereich ihrer Führungskanäle so dicht nebeneinander angeordnet sind, dass sie durch eine gemeinsame Verteilereinrichtung versorgt werden, die im Zwischenbereich zwischen zwei Führungskanälen durch je eine Teilungskante voneinander getrennt sind, und dass
b) durch die Abstände zwischen je zwei Führungskanälen je ein Gestänge für den Antrieb eines in die Glasschmelze einführbaren Schiebers hindurch geführt wird.

Es ist im Zuge weiterer Ausgestaltungen des erfindungsgemäßen Verfahrens besonders vorteilhaft, wenn - entweder einzeln oder in Kombination -:
* Beschickungsgut durch Teilungskanten auf die Schubförderer unterteilt wird, die in einer gemeinsamen waagrechten Ebene angeordnet sind,
* das Beschickungsgut in Querrichtung zu den Teilungskanten eindosiert wird,
* die Querschnitte der Austrittsöffnungen mengenabhängig geregelt werden,
* die Förderleistungen der Schubförderer unabhängig voreinander geregelt werden,
* im Bereich der Austrittsöffnungen ein zusätzlicher Zuschlagstoff eindosiert wird, und/oder, wenn
* der Schieber durch abgewinkelte Gestänge mit einem Drehlager und einen Antrieb derart geführt wird, dass die Unterkante des Schiebers auf seiner Vorwärtsbewegung in die Glasschmelze eintaucht und oberhalb der Glasschmelze und des Beschickungsguts zurück gezogen wird.

Ausführungsbeispiele des Erfindungsgegenstandes und deren Wirkungsweisen und weitere Vorteile werden nachfolgend anhand der Figuren 1 bis 9 näher erläutert.

Es zeigen in überwiegend schematischen Darstellungen:
- Figur 1: eine Ansicht vom Ofen her in Richtung auf die Beschickungsvorrichtung,
- Figur 2: eine teilweise geschnittene Seitenansicht des Gegenstandes von Figur 1,
- Figur 3: einen Schnitt durch den Gegenstand von Figur 4 in der senkrechten Ebenen III-III in Figur 4,
- Figur 4: eine Draufsicht auf den Gegenstand von Figur 4, jedoch ohne den Vorratsbehälter,
- Figur 5: eine teilweise geschnittene Seitenansicht einer Vorrichtung mit einer zusätzlichen Dosiereinrichtung für Zuschlagstoffe,
- Figur 6: eine stirnseitige Ansicht des Gegenstandes von Figur 5 aus der Richtung der Glasschmelzanlage,
- Figur 7: eine stirnseitige Ansicht einer Beschickungsvorrichtung mit vier Schraubenförderern,
- Figur 8: eine Draufsicht auf den Gegenstand von Figur 7, jedoch ohne den Vorratsbehälter und
- Figur 9: eine Draufsicht auf eine Schmelzwanne mit zwei seitlichen Vorbauten, in die Erfindungsgegenstände integriert sind.

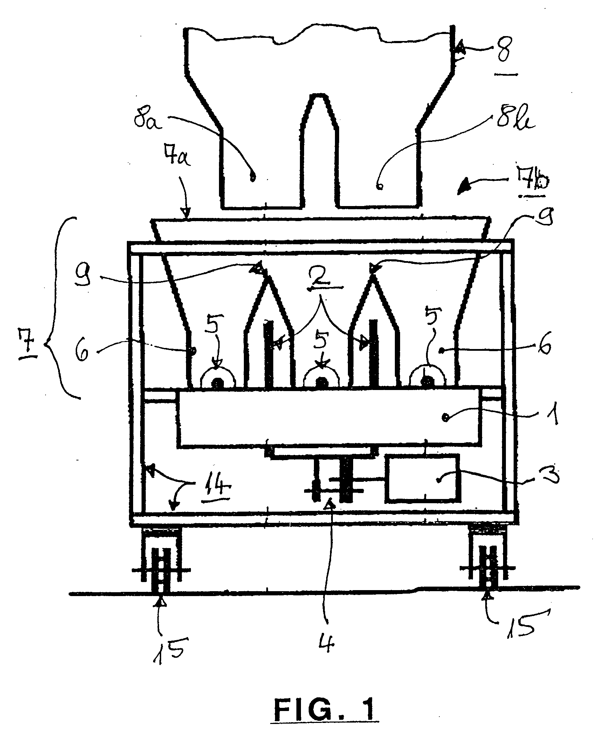

In Figur 1 ist eine Ansicht vom Ofen her in Richtung auf die Beschickungsvorrichtung dargestellt. Frontal befindet sich ein Schieber 1, der durch ein Gestänge 2 angetrieben wird, was weiter unten noch näher erläutert wird. Der Antrieb erfolgt synchron durch einen Antriebsmotor 3 und ein Exzentergetriebe 4. Die Vorrichtung besitzt drei Schubförderer 5, deren Achsen senkrecht zur Zeichenebene verlaufen. Sie sind von Führungskanälen 6 umgeben, die an der Unterseite einer gemeinsamen Verteilereinrichtung 7 angeordnet sind, die eine waagrechte Randkante 7a aufweist, die nach oben hin eine Beschickungsöffnung 7b umschließt. Oberhalb dieser Beschickungsöffnung 7b ist ein Vorratsbehälter 8 angeordnet, der in seinem Bodenbereich zwei Austrittsöffnungen 8a und 8b besitzt. Zwischen den Führungskanälen 6 befinden sich Teilungskanten 9 in Form von Dachfirsten, die in einer gemeinsamen waagrechten Ebene liegen.

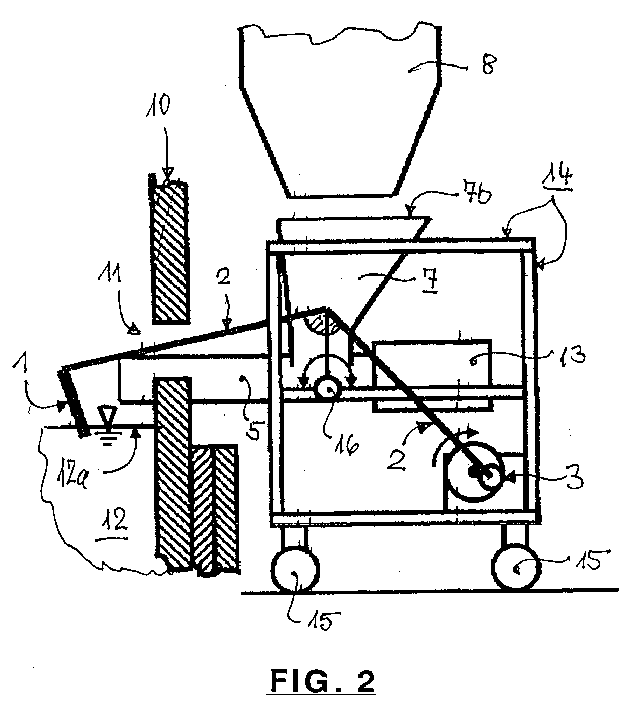

Die Figur 2 zeigt unter Beibehaltung der bisherigen Bezugszeichen eine Wand 10 einer Glasschmelzanlage, die eine Beschickungsöffnung 11 aufweist. Diese Wand kann eine Stirnwand, eine Seitenwand und/oder die Wand eines Vorbaus sein, hinter der sich eine Glasschmelze 12 mit einer Schmelzenoberfläche 12a staut. Durch die Beschickungsöffnung 11 ragen sowohl die Schubförderer 5 als auch der Schieber 1 mit seinem Gestänge 2. Jeder der Schubförderer 5 besitzt einen eigenen Antrieb 13. Die gesamte Anordnung besitzt einen quaderförmigen Rahmen 14, der in bekannter Weise durch an den Kanten verlaufende Winkelprofile gebildet wird und auf Rollen 15 verfahrbar ist. Zu dem Gestänge 2 gehört noch ein Drehlager 16, das zusammen mit dem Exzenter-Antrieb 3 am Schieber 1 eine geschlossene senkrechte Umlaufbahn erzeugt, durch die eine Unterteilung und eine Transportbewegung des Beschickungsguts von der Wand 10 hinweg erzeugt wird.

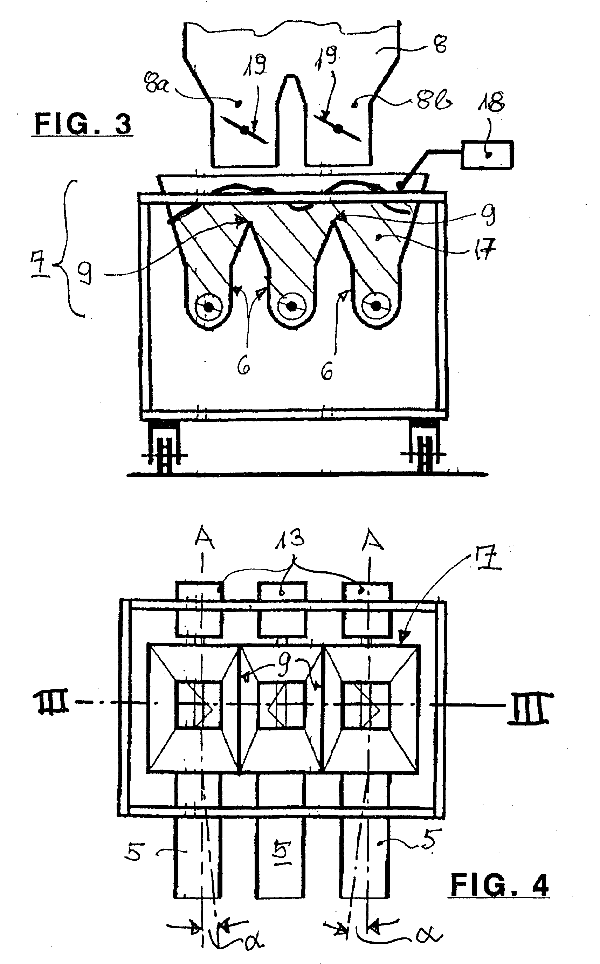

Die Figur 3 zeigt die Füllung der Führungskanäle 6 mit dem Beschickungsgut 17, dessen Oberfläche durchaus profiliert sein kann. Der Füllstand wird durch einen bekannten Füllstandsmesser 18 gemessen und geregelt. Dessen Ausgangssignal wird auf hier nicht gezeigte Stellmotoren übertragen, durch die Steuerklappen 19 in den Austrittsöffnungen 8a und 8b des Vorratsbehälters 8 bedarfsabhängig einstellbar sind. Die Austrittsöffnungen 8a und 8b liegen mittig über den Teilungskanten 9, wodurch die Gleichmäßigkeit der Verteilung gefördert wird.

In der Zusammenschau mit Figur 4 zeigt sich, dass die Abstände der Schubförderer 5 bzw. von deren Führungskanälen 6 auch durch deren Einlaufbereiche vorgegeben sind, die die Form von auf dem Kopf stehenden Pyramidenstümpfen haben und nur engstmöglich durch die Teilungskanten 9 getrennt sind. Hier sind drei Schubförderer 5 gezeigt, die mit je einem Antrieb 13 versehen sind. Die Achsen Ader äußeren Schubförderer 5 können in Austrittsrichtung unter einem Winkel "α", der zwischen 1 und 15 Grad betragen kann, konvergieren, so dass auch der Strom des Beschickungsguts 17 entsprechend konvergiert. Dies gilt auch für die anderen Ausführungsbeispiele.

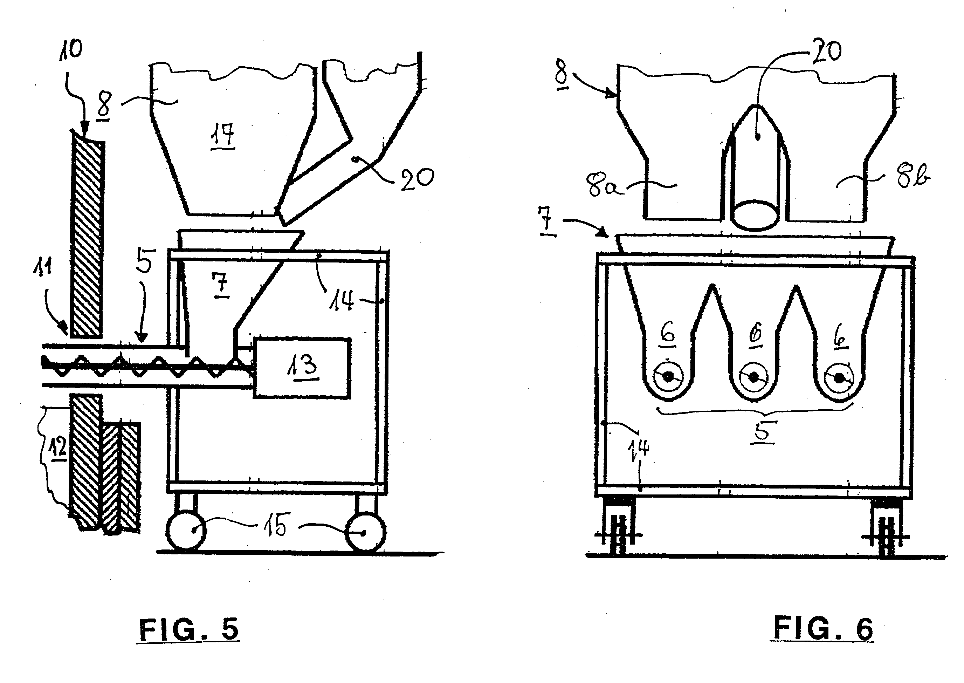

Die Figuren 5 und 6 zeigen unter Beibehaltung der bisherigen Bezifferung eine teilweise geschnittene Seitenansicht und eine stirnseitige Ansicht einer Vorrichtung mit einer zusätzlichen Dosiereinrichtung 20 für Zuschlagstoffe, zu denen auch Rezyklat gehören kann.

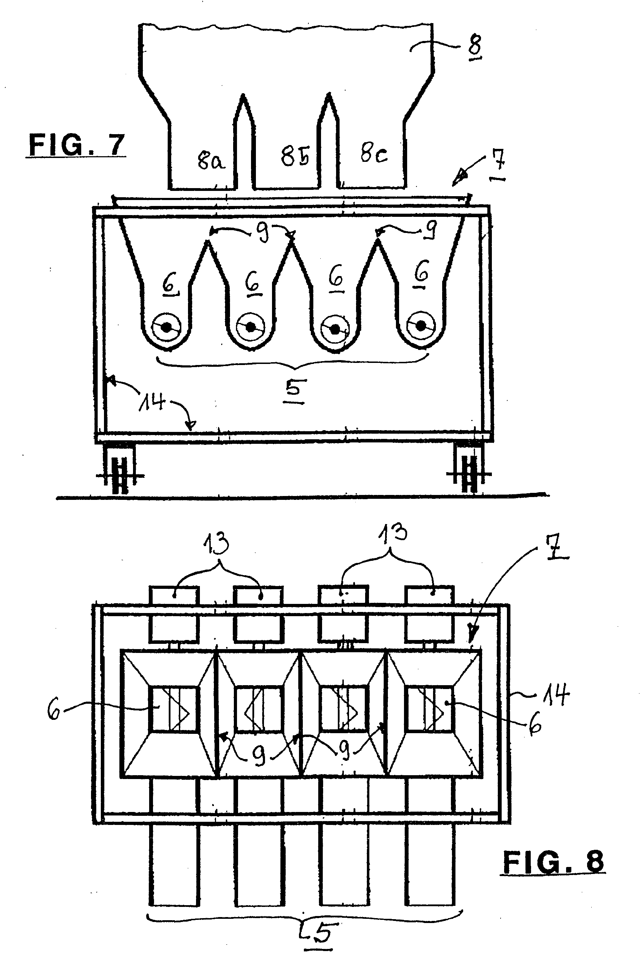

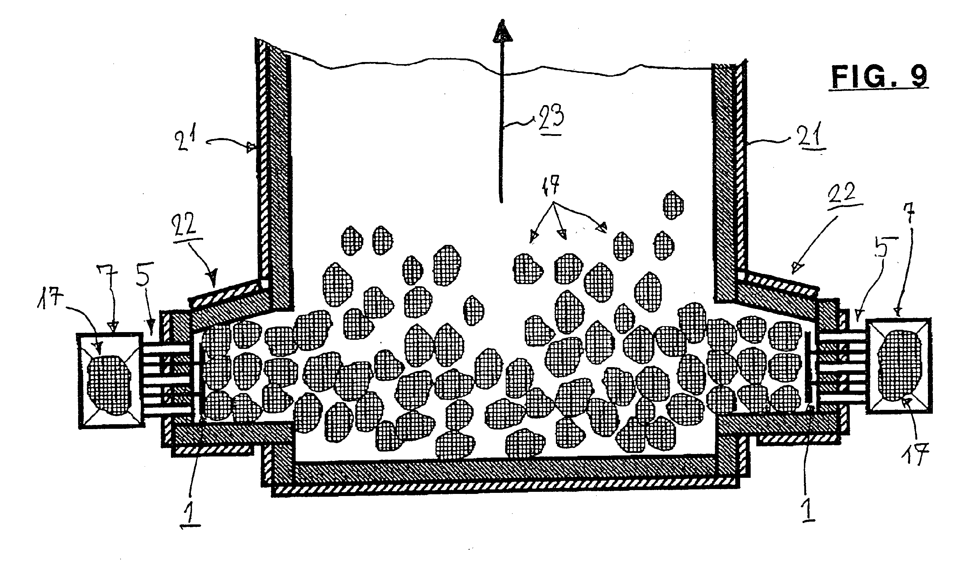

Die Figuren 7 und 9 zeigen in Analogie zu den Figuren 3 und 4 eine Ausweitung des Erfindungsgedankens auf vier Schubförderer 5 und vier Führungskanäle 6. Auch die Anzahl der Austrittsöffnungen 8a und 8b wurde um eine Austrittsöffnung 8c erweitert. Auch hierbei zeigt sich, dass alle drei Austrittsöffnungen 8a, 8b und 8c jeweils symmetrisch auf die Teilungskanten 9 ausgerichtet sind, was für die Querverteilung des Beschickungsguts 17 sehr förderlich ist.

Die Figur 9 zeigt eine Draufsicht auf eine Schmelzwanne 21 mit zwei seitlichen Vorbauten 22, in die Erfindungsgegenstände mit jeweils drei Schubförderern 5 integriert sind. Es zeigt sich, dass das Beschickungsgut 17 in relativ kleine "Päckchen" oder schwimmende Inseln unterteilt wird, deren Größe in Richtung der Summenströmung - Pfeil 23 - abnimmt und deren Abstand voneinander zunimmt. Dies fördert sehr den Energieeintrag in die Schmelze durch Strahlung von oben her und die partielle Zirkulation der Schmelze unterhalb dieser Inseln und damit des gesamten Schmelzvorgangs.

**Bezugszeichenliste:**

| | | | |
|---|---|---|---|
| 1 | Schieber | 21 | Schmelzwanne |
| 2 | Gestänge | 22 | Vorbauten |
| 3 | Antriebsmotor | 23 | Summenströmung (Pfeil) |
| 4 | Exzentergetriebe | | |
| 5 | Schubförderer | A, A-A | Achsen |
| 6 | Führungskanäle | α | Winkel |
| 7 | Verteilereinrichtung | | |
| 7a | Randkante | | |
| 7b | Beschickungsöffnung | | |
| 8 | Vorratsbehälter | | |
| 8a | Austrittsöffnung | | |
| 8b | Austrittsöffnung | | |
| 8c | Austrittsöffnung | | |
| 9 | Teilungskanten | | |
| 10 | Wand | | |
| 11 | Beschickungsöffnung | | |
| 12 | Glasschmelze | | |
| 12a | Schmelzenoberfläche | | |
| 13 | Antrieb | | |
| 14 | Rahmen | | |
| 15 | Rollen | | |
| 16 | Drehlager | | |
| 17 | Beschickungsgut | | |
| 18 | Füllstandsmesser | | |
| 19 | Steuerklappen | | |
| 20 | Dosiervorrichtung | | |

## Patentansprüche

1. Beschickungsvorrichtung für das Einlegen von partikelförmigem Beschickungsgut (17) in Glasschmelzanlagen mit Schubförderern (5), die von Vorratsbehältern (8) über Führungskanäle (6) versorgt werden und auf die Schmelzenoberfläche (12a) ausgerichtet sind, und mit mindestens einem Schieber (1) für den Vorschub des Beschickungsguts (17) auf der Schmelzenoberfläche (12a), **dadurch gekennzeichnet, dass**
a) mindestens drei Schubförderer (5) nebeneinander angeordnet und im Bereich ihrer Führungskanäle (6) so dicht nebeneinander angeordnet sind, dass sie durch eine gemeinsame Verteilereinrichtung (7) versorgbar sind, die im Zwischenbereich zwischen zwei Führungskanälen (6) durch je eine Teilungskante (9) voneinander getrennt sind, und dass
b) durch den Abstand zwischen je zwei Führungskanälen (6) je ein Gestänge (2) für den Antrieb eines in die Glasschmelze (12) einführbaren Schiebers (1) hindurch geführt ist.

2. Beschickungsvorrichtung nach Anspruch 1, **dadurch gekennzeichnet, dass** die Teilungskanten (9) in einer gemeinsamen waagrechten Ebene angeordnet sind.

3. Beschickungsvorrichtung nach Anspruch 1, **dadurch gekennzeichnet, dass** die Teilungskanten (9) mit Abstand unterhalb einer waagrechten Randkante (7a) angeordnet sind, die' eine gemeinsame Beschickungsöffnung (7b) nach oben hin umschließt.

4. Beschickungsvorrichtung nach Anspruch 3, **dadurch gekennzeichnet, dass** oberhalb der Beschickungsöffnung (7b) ein Vorratsbehälter (8) angeordnet ist, der in seinem Bodenbereich mindestens zwei Austrittsöffnungen (8a, 8b, 8c) besitzt, die in Querrichtung zu den Teilungskanten (9) angeordnet sind.

5. Beschickungsvorrichtung nach Anspruch 4, **dadurch gekennzeichnet, dass** die Querschnitte der Austrittsöffnungen (8a, 8b, 8c) mengenabhängig regelbar sind.

6. Beschickungsvorrichtung nach Anspruch 1, **dadurch gekennzeichnet, dass** die Transportrichtungen der Schubförderer (5) einstellbar ausgebildet sind.

7. Beschickungsvorrichtung nach Anspruch 1, **dadurch gekennzeichnet, dass** die Förderleistungen der Schubförderer (5) einstellbar ausgebildet sind.

8. Beschickungsvorrichtung nach Anspruch 4, **dadurch gekennzeichnet, dass** im Bereich der Austrittsöffnungen (8a, 8b, 8c) eine zusätzliche Dosiereinrichtung (20) für Zuschlagstoffe angeordnet ist.

9. Beschickungsvorrichtung nach Anspruch 1, **dadurch gekennzeichnet, dass** der Schieber (1) durch abgewinkelte Gestänge (2) mit einem Drehlager (16) und einem Antriebsmotor (3) derart geführt ist, dass die Unterkante des Schiebers (1) auf seiner Vorwärtsbewegung in die Glasschmelze (12) eingetaucht und oberhalb der Glasschmelze (12) und des Beschickungsguts (17) zurückziehbar ist.

10. Verfahren zum Einlegen von partikelförmigem Beschickungsgut (17) in Glasschmelzanlagen mit Schubförderern (5), die von Vorratsbehältern (8) über Führungskanäle (6) versorgt werden und auf die Schmelzenoberfläche (12a) ausgerichtet sind, und mit mindestens einem Schieber (1) für den Vorschub des Beschickungsguts (17) auf der Schmelzenoberfläche (12a), **dadurch gekennzeichnet, dass**
a) mindestens drei Schubförderer (5) nebeneinander angeordnet und im Bereich ihrer Führungskanäle (6) so dicht nebeneinander angeordnet sind, dass sie durch eine gemeinsame Verteilereinrichtung (7) versorgt werden, die im Zwischenbereich zwischen zwei Führungskanälen (6) durch je eine Teilungskante (9) voneinander getrennt sind, und dass
b) durch den Abstand zwischen je zwei Führungskanälen (6) je ein Gestänge (2) für den Antrieb eines in die Glasschmelze (12) einführbaren Schiebers (1) hindurch geführt wird.

11. Verfahren nach Anspruch 10, **dadurch gekennzeichnet, dass** das Beschickungsgut (17) durch Teilungskanten (9) auf die Schubförderer (5) unterteilt wird, die in einer gemeinsamen waagrechten Ebene angeordnet sind.

12. Verfahren nach Anspruch 10, **dadurch gekennzeichnet, dass** das Beschickungsgut (17) in Querrichtung zu den Teilungskanten (9) eindosiert wird.

13. Verfahren nach Anspruch 10, **dadurch gekennzeichnet, dass** die Querschnitte der Austrittsöffnungen (8a, 8b, 8c) mengenabhängig geregelt werden.

14. Verfahren nach Anspruch 10, **dadurch gekennzeichnet, dass** die Förderleistungen der Schubförderer (5) unabhängig voneinander geregelt werden.

15. Verfahren nach Anspruch 10, **dadurch gekennzeichnet, dass** im Bereich der Austrittsöffnungen (8a, 8b, 8c) ein zusätzlicher Zuschlagstoff eindosiert wird.

16. Verfahren nach Anspruch 10, **dadurch gekennzeichnet, dass** der Schieber (1) durch abgewinkelte Gestänge (2) mit einem Drehlager (16) und einen Antrieb (13) derart geführt wird, dass die Unterkante des Schiebers (1) auf seiner Vorwärtsbewegung in die Glasschmelze (12) eintaucht und oberhalb der Glasschmelze (12) und des Beschickungsguts (17) zurück gezogen wird.

## Claims

1. A feeding device for introducing particulate feedstock (17) into glass melting installations, with pushing conveyors (5) that are supplied by storage containers (8) via guide channels (6) and directed onto the melt surface (12a) and with at least one slide (1) for advancing the feedstock (17) on the melt surface (12a), **characterized in that**
a) at least three pushing conveyors (5) are arranged adjacent to one another and in the region of their guide channels (6) arranged so closely adjacent to one another that they can be supplied by a common distributing device (7), wherein said pushing conveyors are respectively separated from one another in the intermediate region between two guide channels (6) by a dividing edge (9), and that
b) a respective linkage (2) for the drive of a slide (1) that can be introduced into the glass melt (12) respectively extends through the clearance between two guide channels (6).

2. The feeding device according to Claim 1, **characterized in that** the dividing edges (9) are arranged in a common horizontal plane.

3. The feeding device according to Claim 1, **characterized in that** the dividing edges (9) are arranged a certain distance underneath a horizontal outer edge (7a) that upwardly encloses a common feed opening (7b).

4. The feeding device according to Claim 3, **characterized in that** a storage container (8) is arranged above the feed opening (7b) and features in its bottom region at least two outlet openings (8a, 8b, 8c) that are arranged transverse to the dividing edges (9).

5. The feeding device according to Claim 4, **characterized in that** the cross sections of the outlet openings (8a, 8b, 8c) can be controlled in a quantity-dependent fashion.

6. The feeding device according to Claim 1, **characterized in that** the transport directions of the pushing conveyors (5) are adjustable.

7. The feeding device according to Claim 1, **characterized in that** transport capacities of the pushing conveyors (5) are adjustable.

8. The feeding device according to Claim 4, **characterized in that** an additional metering device (20) for additives is arranged in the region of the outlet openings (8a, 8b, 8c).

9. The feeding device according to Claim 1, **characterized in that** the slide (1) is guided by means of angled linkages (2) with a pivot bearing (16) and a driving motor (3) in such a way that the lower edge of the slide (1) is immersed in the glass melt (12) during its forward motion and retractable above the glass melt (12) and the feedstock (17).

10. A method for introducing particulate feedstock (17) into glass melting installations, with pushing conveyors (5) that are supplied by storage containers (8) via guide channels (6) and directed onto the melt surface (12a) and with at least one slide (1) for advancing the feedstock (17) on the melt surface (12a), **characterized in that**
a) at least three pushing conveyors (5) are arranged adjacent to one another and in the region of their guide channels (6) arranged so closely adjacent to one another that they can be supplied by a common distributing device (7), wherein said pushing conveyors are respectively separated from one another in the intermediate region between two guide channels (6) by a dividing edge (9), and that
b) a respective linkage (2) for the drive of a slide (1) that can be introduced into the glass melt (12) respectively extends through the clearance between two guide channels (6).

11. The method according to Claim 10, **characterized in that** the feedstock (17) is distributed onto the pushing conveyors (5) by dividing edges (9) that are arranged in a common horizontal plane.

12. The method according to Claim 10, **characterized in that** the feedstock (17) is introduced in a metered fashion transverse to the dividing edges (9).

13. The method according to Claim 10, **characterized in that** the cross sections of the outlet openings (8a, 8b, 8c) are controlled in a quantity-dependent fashion.

14. The method according to Claim 10, **characterized in that** the transport capacities of the pushing conveyors (5) are controlled independently of one another.

15. The method according to Claim 10, **characterized in that** an extra additive is introduced in a metered fashion in the region of the outlet openings (8a, 8b, 8c).

16. The method according to Claim 10, **characterized in that** the slide (1) is guided by means of angled linkages (2) with a pivot bearing (16) and a drive (13) in such a way that the lower edge of the slide (1) is immersed in the glass melt (12) during its forward motion and retracted above the glass melt (12) and the feedstock (17).

## Revendications

1. Dispositif de chargement pour l'insertion de charge de type particulaire (17) dans des installations de fusion de verre à l'aide de convoyeurs pousseurs (5) qui sont alimentés par des réservoirs (8) via des canaux de guidage (6) et sont dirigés vers la surface de la coulée (12a) et comportent au moins un curseur (1) pour faire avancer la charge (17) sur la surface de la coulée (12a), **caractérisé en ce que**
a) au moins trois convoyeurs pousseurs (5) sont juxtaposés et disposés assez serrés l'un contre l'autre au niveau de leurs canaux de guidage (6) pour pouvoir être alimentés par un dispositif répartiteur commun (7) et sont chacun séparés les uns des autres dans la zone intermédiaire entre deux canaux de guidage (6) par un bord diviseur (9) et que
b) dans l'intervalle entre chacun des deux canaux de guidage (6), passe une tige (2) destinée à entraîner un curseur (1) pouvant être introduit dans la coulée de verre (12).

2. Dispositif de chargement selon la revendication 1, **caractérisé en ce que** les bords diviseurs (9) sont disposés dans un plan horizontal commun.

3. Dispositif de chargement selon la revendication 1, **caractérisé en ce que** les bords diviseurs (9) sont disposés à distance en-dessous d'une bordure horizontale (7a) qui circonscrit vers le haut une ouverture de chargement commune (7b).

4. Dispositif de chargement selon la revendication 3, **caractérisé en ce que**, au-dessus de l'ouverture de chargement commune (7b), est disposé un réservoir (8) qui possède au niveau de son fond au moins deux orifices de sortie (8a, 8b, 8c) qui sont disposés dans un sens transversal par rapport aux bords diviseurs (9).

5. Dispositif de chargement selon la revendication 4, **caractérisé en ce que** les sections transversales des orifices de sortie (8a, 8b, 8c) sont réglables en fonction de la quantité.

6. Dispositif de chargement selon la revendication 1, **caractérisé en ce que** les sens de transport des convoyeurs pousseurs (5) sont conçus pour être réglables.

7. Dispositif de chargement selon la revendication 1, **caractérisé en ce que** les capacités de transport des convoyeurs pousseurs (5) sont conçues pour être réglables.

8. Dispositif de chargement selon la revendication 4, **caractérisé en ce que**, au niveau des orifices de sortie (8a, 8b, 8c), est disposé un dispositif de dosage (20) supplémentaire pour des additifs.

9. Dispositif de chargement selon la revendication 1, **caractérisé en ce que** le curseur (1) est guidé par des tiges coudées (2) à l'aide d'un palier rotatif (16) et d'un moteur d'entraînement (3) de manière à ce que le bord inférieur du curseur (1), lors de son mouvement vers l'avant, plonge dans la coulée de verre (12) et puisse être reculé au-dessus de la coulée de verre (12) et de la charge (17).

10. Procédé d'insertion de charge de type particulaire (17) dans des installations de fusion de verre à l'aide de convoyeurs pousseurs (5) qui sont alimentés par des réservoirs (8) via des canaux de guidage (6) et sont dirigés vers la surface de la coulée (12a) et comportent au moins un curseur (1) pour faire avancer la charge (17) sur la surface de la coulée (12a), **caractérisé en ce que**
a) au moins trois convoyeurs pousseurs (5) sont juxtaposés et disposés assez serrés l'un contre l'autre au niveau de leurs canaux de guidage (6) pour pouvoir être alimentés par un dispositif répartiteur commun (7) et qui sont chacun séparés les uns des autres dans la zone intermédiaire entre deux canaux de guidage (6) par un bord diviseur (9) et que
b) dans l'intervalle entre chacun des deux canaux de guidage (6), passe une tige (2) destinée à entraîner un curseur (1) pouvant être introduit dans la coulée de verre (12).

11. Procédé selon la revendication 10, **caractérisé en ce que** la charge (17) est subdivisée sur les convoyeurs pousseurs (5) par des bords diviseurs (9) qui sont disposés dans un plan horizontal commun.

12. Procédé selon la revendication 10, **caractérisé en ce que** la charge (17) est ajoutée dans le sens transversal par rapport aux bords diviseurs (9).

13. Procédé selon la revendication 10, **caractérisé en ce que** les sections transversales des orifices de sortie (8a, 8b, 8c) sont réglées en fonction de la quantité.

14. Dispositif de chargement selon la revendication 10, **caractérisé en ce que** les capacités de transport des convoyeurs pousseurs (5) sont réglables indépendamment les unes des autres.

15. Procédé selon la revendication 10, **caractérisé en ce qu'**un additif supplémentaire est ajouté au niveau des orifices de sortie (8a, 8b, 8c).

16. Dispositif de chargement selon la revendication 10, **caractérisé en ce que** le curseur (1) est guidé par des tiges coudées (2) à l'aide d'un palier rotatif (16) et d'un moteur d'entraînement (13) de manière à ce que le bord inférieur du curseur (1), lors de son mouvement vers l'avant, plonge dans la coulée de verre (12) et recule au-dessus de la coulée de verre (12) et de la charge (17).
